# EUROPEAN PATENT SPECIFICATION

(11) **EP 4 209 358 B1**
(45) Date of publication and mention of the grant of the patent: **20.05.2026**
(21) Application number: 23150404.4
(22) Date of filing: 05.01.2023
(51) Int. Cl.: B60B 19/12, B60G 21/05

(54) **TORSION BAR ASSEMBLY FOR A MATERIAL HANDLING VEHICLE**
TORSIONSSTABANORDNUNG FÜR EIN MATERIALHANDHABUNGSFAHRZEUG
ENSEMBLE BARRE DE TORSION POUR UN VÉHICULE DE MANUTENTION DE MATÉRIAUX

(30) Priority: 05.01.2022 US 202263296664 P
(43) Date of publication of application: 12.07.2023
(73) Proprietor: The Raymond Corporation, Greene, New York 13778 (US)
(72) Inventor: Yahner, Joseph T., Chenango Forks 13746 (US)
(74) Representative: Zacco Sweden AB

(56) References cited:
- EP-A1- 3 279 009
- WO-A2-2006/113511

## Description

### CROSS-REFERENCES TO RELATED APPLICATIONS

This application claims the benefit of U.S. Patent Application Number 63/296,664, filed January 5, 2022, entitled "TORSION BAR ASSEMBLY FOR A MATERIAL HANDLING VEHICLE,".

### BACKGROUND

Warehouses typically employ the use of multiple material handling vehicles, specifically, operators may utilize pallet trucks to move pallets about the warehouse. Pallet trucks may be powered or may be manually pulled or pushed by an operator. Examples of material handling vehicles are disclosed in WO 2006/113511 A2 and in EP 3 279 009 A1.

### BRIEF SUMMARY

The present invention provides a material handling vehicle according to claim 1. Some of the embodiments of the invention are summarized below.

One embodiment generally concerns the material handling vehicle in which the steerable drive wheel is laterally offset from a longitudinal axis of the material handling vehicle.

One embodiment generally concerns the material handling vehicle of any previous embodiment in which the preload member is a first preload member coupled to a first end of the torsion bar.

One embodiment generally concerns the material handling vehicle of any previous embodiment in which an opposing second end of the torsion bar is rotationally fixed relative to the vehicle frame.

One embodiment generally concerns the material handling vehicle of any previous embodiment in which the torsion bar assembly includes a first preload member coupled to a first end of the torsion bar and a second preload member coupled to an opposing second end of the torsion bar.

One embodiment generally concerns the material handling vehicle of any previous embodiment in which the one or more caster assemblies includes a first caster assembly and a second caster assembly.

One embodiment generally concerns the material handling vehicle of any previous embodiment in which the first and second caster assemblies are mounted on laterally opposing sides of the steerable drive wheel.

One embodiment generally concerns the material handling vehicle of any previous embodiment in which the preload member includes an adjustment screw threadedly engaged with the preload member.

One embodiment generally concerns the material handling vehicle of any previous embodiment in which clockwise adjustment of the adjustment screw is configured to increase a contact force between the adjustment screw and an underside of the vehicle frame.

One embodiment generally concerns the material handling vehicle of any previous embodiment in which increasing the contact force applied to the underside of the vehicle frame by the adjustment screw is configured to rotate the preload member about an axis formed by the torsion bar.

One embodiment generally concerns the material handling vehicle of any previous embodiment in which rotation of the preload member about the axis formed by the torsion bar adjusts the static position of the one or more caster assemblies.

One embodiment generally concerns the material handling vehicle of any previous embodiment including a first caster assembly and a second caster assembly mounted on laterally opposing sides of the steerable drive wheel.

One embodiment generally concerns the material handling vehicle of any previous embodiment in which the preload member is configured to threadedly receive an adjustment screw.

One embodiment generally concerns the material handling vehicle of any previous embodiment in which the adjustment screw bears against an underside of the vehicle frame.

One embodiment generally concerns the material handling vehicle of any previous aspect in which the normal force applied by the vehicle frame on the adjustment screw rotates the preload member about an axis formed by the torsion bar.

One embodiment generally concerns the material handling vehicle of any previous embodiment including one or more casters.

One embodiment generally concerns the material handling vehicle of any previous embodiment including a base plate mounted between the one or more casters and the vehicle frame.

One embodiment generally concerns the material handling vehicle of any previous embodiment including a caster arm rigidly mounted to the base plate.

One embodiment generally concerns the material handling vehicle of any previous embodiment in which the caster arm mounts to the torsion bar at one end and mounts to the one or more casters at an opposing end.

One embodiment generally concerns the material handling vehicle of any previous embodiment including a torsion bar rigidly coupled to the one or more caster assemblies via the caster arm.

One embodiment generally concerns the material handling vehicle of any previous embodiment in which the adjustment screw applies an increasing contact force to an underside of the vehicle frame upon clockwise rotation of the adjustment screw.

One embodiment generally concerns the material handling vehicle of any previous embodiment in which the contact force applied to the underside of the vehicle frame by the adjustment screw corresponds to rotation in the preload member about an axis formed by the torsion bar.

One embodiment generally concerns the material handling vehicle of any previous embodiment in which rotation of the preload member about the axis formed by the torsion bar corresponds to an adjustment in the static position of the one or more casters.

The foregoing and other embodiments and advantages of the invention will appear from the following description. In the description, reference is made to the accompanying drawings which form a part hereof, and in which there is shown by way of illustration a preferred configuration of the invention. Such configuration does not necessarily represent the full scope of the invention, however, and reference is made therefore to the claims and herein for interpreting the scope of the invention.

### BRIEF DESCRIPTION OF DRAWINGS

The invention will be better understood and features, aspects, and advantages other than those set forth above will become apparent when consideration is given to the following detailed description thereof. Such detailed description makes reference to the following drawings.
FIG. 1 is a side view of a material handling vehicle ("MHV") in the form of a pallet truck according to aspects of the present invention.
FIG. 2 is a bottom view of the MHV of FIG. 1.
FIG. 3 is a perspective view of a torsion bar assembly for use with the MHV of FIG. 1.
FIG. 4 is a bottom view of another example of a MHV in the form of a pallet truck according to another aspect of the present invention.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from the scope of the invention as defined in the appended claims.

It is also to be appreciated that material handling vehicles ("MHVs") are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, and/or loads of goods can be required to be transported from place to place. The various systems and methods disclosed herein are suitable for any of operator controlled, pedestrian controlled, remotely controlled, and autonomously controlled material handling vehicles.

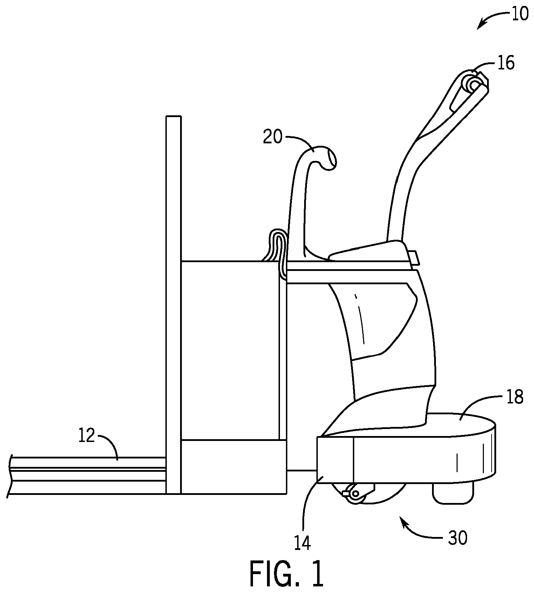

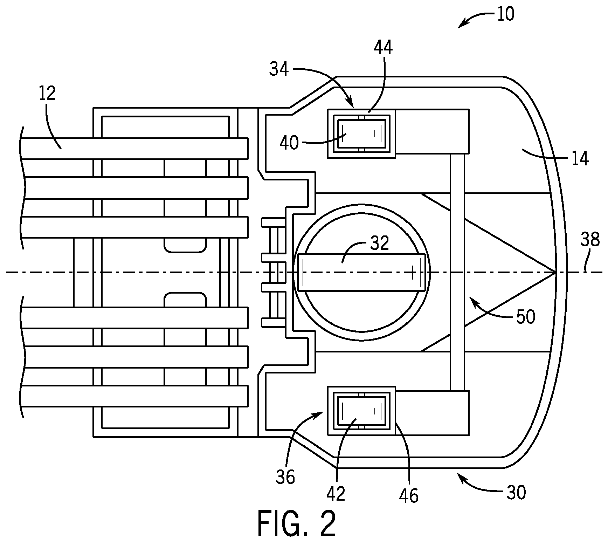

FIGS. 1 and 2 illustrate one non-limiting example of a MHV 10 according to the present disclosure. In the illustrated non-limiting example, the MHV 10 is a pallet truck. The MHV 10 can include a fork assembly 12 having a pair of forks attached to a vehicle frame 14, and a steer arm 16 usable by an operator to guide the MHV. According to some non-limiting examples, the MHV 10 can include a mast and one or more actuators configured to raise or lower the fork assembly 12 relative to the vehicle frame 14. In one example, the steer arm 16 can include electronic and/or mechanical controls usable by an operator to control the one or more actuators to raise and lower the fork assembly 12. In another example, the electronic and/or mechanical controls activate a traction motor housed within the vehicle frame 14. In the illustrated non-limiting example, the MHV can include an operator platform 18 and a control handle 20 that can be manipulated by an operator. The MHV 10 can be powered by a traction motor and guided by the steer arm 16. In other non-limiting examples, the MHV 10 can be autonomously guided. In either case, the MHV 10 can be used to transport a load which may be placed on the fork assembly 12.

The MHV 10 can include a wheel assembly 30 supported by the vehicle frame 14. The wheel assembly 30 can include one or more ground engaging wheels to support the MHV 10. In the illustrated non-limiting example, the wheel assembly 30 is arranged below the operator platform 18. It should be understood that the MHV 10 shown is merely one example of a type of MHV that could be used with the wheel assembly 30. For example, the wheel assembly 30 could be used on other types of MHVs 10, such as those previously noted above. In some non-limiting examples, the wheel assembly 30 can include a drive wheel and at least one caster.

As illustrated in FIG. 2, the wheel assembly 30 includes a drive wheel 32, a first caster assembly 34, and a second caster assembly 36. The drive wheel 32 can be coupled to the vehicle frame 14 and arranged along a longitudinal axis 38 bisecting the MHV 10 in a fore and aft direction (e.g., a roll axis). The drive wheel 32 can be steered through use of the steer arm 16. According to other non-limiting examples, the drive wheel 32 can be steered by a control stick and/or other controls usable by an operator. Alternatively, or additionally, the drive wheel 32 can be steered by a controller that autonomously controls the drive wheel 32. According to some non-limiting examples, the drive wheel 32 can be powered by a traction motor (e.g., an electric motor) coupled to the drive wheel 32.

In one non-limiting example, the first and second caster assemblies 34, 36 are arranged on laterally opposite sides of the drive wheel 32 (e.g., on opposing sides of the longitudinal axis 38). In one non-limiting example, the first caster assembly 34 includes a first caster 40 supported by a first base plate 44 and the second caster assembly 36 includes a second caster 42 supported by a second base plate 46. In the illustrated embodiment, the first and second caster assemblies 34, 36 are not spring-mounted casters, and therefore no spring exists within the assemblies. The first and second casters 40, 42 can swivel about an axis perpendicular to the traveling surface (e.g., warehouse floor). This allows the first and second casters 40, 42 to follow the direction of the drive wheel 32 as the drive wheel 32 turns. As described below, the first and second caster assemblies 34, 36 can be coupled together via a torsion bar configured to apply a preload and/or biasing force to the first and second casters 40, 42.

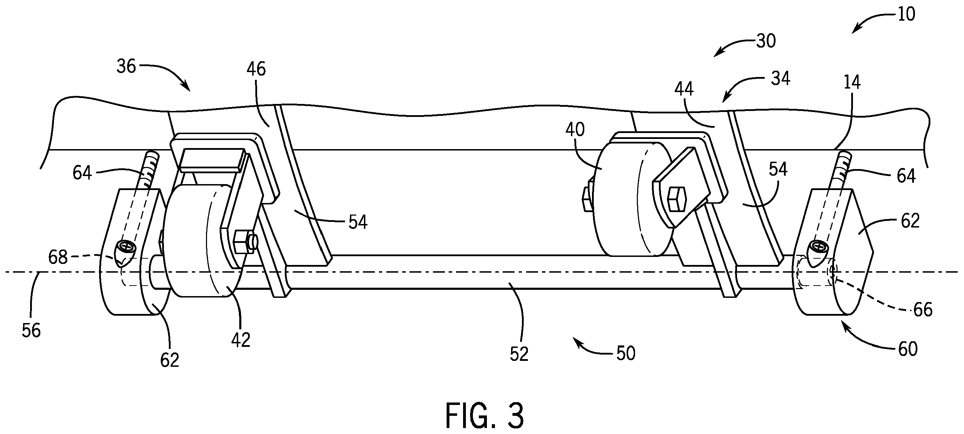

FIG. 3 shows a bottom perspective view of a torsion bar assembly 50. The torsion bar assembly 50 couples the first and second caster assemblies 34, 36 to the vehicle frame 14. Additionally, the torsion bar assembly 50 is configured to couple the first and second caster assemblies 34, 36 together, such that the first and second caster assemblies 34, 36 are tied together. The torsion bar assembly 50 can include a torsion bar 52 arranged below the vehicle frame 14 and extending laterally along the vehicle frame 14. In one non-limiting example, the torsion bar 52 can be pivotally coupled to the vehicle frame 14 via one or more caster arms 54. In the illustrated non-limiting example, the torsion bar assembly 50 includes caster arms 54 rigidly coupled to the torsion bar 52 and extending radially away from the torsion bar 52 (e.g., relative to an axis 56 defined by the torsion bar). The base plates 44, 46 of the first and second caster assemblies 34, 36 can be rigidly coupled to the caster arms 54 such that the first and second caster assemblies 34, 36 can pivot about the torsion bar axis 56. In such an arrangement, the first and second caster assemblies 34, 36 are pivotally coupled to the vehicle frame 14 via the torsion bar assembly 50. The caster arms 54 act as a lever for a load applied to the casters 40, 42, which is then transferred into the torsion bar 52 in the form of a torque applied in a first direction.

The torsion bar assembly 50 includes at least one preload member 60. The preload member 60 is configured to alter a static location of the casters 40, 42, by pivoting the torsion bar 52 (or twisting) relative to the vehicle frame 14. In some non-limiting examples, the preload member 60 is configured apply a preload torque to the torsion bar 52 in a second direction, which is opposite the first direction described previously. As should be appreciated, the preload applied to the torsion bar 52 is not set by a spring, rather, it is set by the positioning of the preload members 60.

The preload member 60 can be coupled to a first end 66 of the torsion bar 52. According to some non-limiting examples, the torsion bar assembly 50 can include a preload member 60 coupled to the first end 66 of the torsion bar 52, while a second end 68 of the torsion bar 52 is mounted the vehicle frame 14. As should be appreciated, in this configuration, the second end 68 of the torsion bar 52 is rotationally fixed (e.g., no preload member 60). However, in the illustrated non-limiting example, the torsion bar assembly 50 includes a preload member 60 arranged at both the first end 66 and the second end 68 of the torsion bar 52. Thus, neither the first end 66 nor the second end 68 of the torsion bar 52 are rotationally fixed.

In the illustrated non-limiting example, the preload members 60 include one or more preload arms 62 configured to threadedly receive an adjustment screw 64. In one non-limiting example, the adjustment screw 64 may be in the form of a jackscrew. However, in other non-limiting examples, the adjustment screw 64 may take on any other form. The preload members 60 can be rigidly coupled to (e.g., rotationally locked with) each of the first and second ends 66, 68 of the torsion bar 52. For example, the preload arms may include a notch and/or detent into which the first and second ends 66, 68 of the torsion bar 52 may be received. The preload members 60 may be rotatably coupled to the vehicle frame 14, such that rotating the preload members 60 also rotates the casters 40, 42 in the same direction. In yet another non-limiting example, movement of the preload members 60 may correlate with movement of the casters 40, 42. For example, downward (away from vehicle frame 14) movement of the preload member 60 may correspond to downward (away the vehicle frame 14) movement of the casters 40, 42 and vice versa.

The adjustment screw 64 extends into and engages with a threaded opening in the preload arm 62. An end of the adjustment screw 64 bears against (e.g., contacts) the vehicle frame 14 urging the torsion bar 52 to rotate about the torsion bar axis 56 in the second direction. As should be appreciated, the amount of rotation of the preload member 60 and torsion bar 52 is proportional to the position of the adjustment screw 64. As one non-limiting example, clockwise rotation of the adjustment screw 64 applies a larger contact force against an underside of the vehicle frame 14, which corresponds to a larger rotation of the preload member 60 and the torsion bar 52. Likewise, counterclockwise rotation of the adjustment screw 64 reduces the contact force between the adjustment screw 64 and the vehicle frame 14, which corresponds to less rotation of the preload member 60 and the torsion bar 52.

As a result of rotation of the preload member 60 and torsion bar 52 in the second direction, the casters 40, 42 move downward (e.g., away from the vehicle frame 14) when the casters 40, 42 are unloaded (e.g., when the MHV 10 is in a service configuration lifted off the ground). However, when the casters 40, 42 are loaded (e.g., when you put the MHV 10 on the ground) the load applied to the casters 40, 42, from the ground applies a torque to the torsion bar 52 in the first direction (e.g., towards the vehicle frame), resulting in the torsion bar 52 twisting in the first direction (e.g., towards the vehicle frame 14). The twisting of the torsion bar 52 applies a set load to each caster 40, 42, which assists in maintaining contact between the casters 40, 42 and the ground throughout the service life of the drive wheel. As should be appreciated, based on the amount of rotation of the preload member 60 and the torsion bar 52, the load on the casters 40, 42 may be larger or smaller. For example, less rotation of the preload member 60 and the torsion bar 52 may correspond to less load on the casters 40, 42 whereas more rotation of the preload member 60 and the torsion bar 52 may correspond to a larger load on the casters 40, 42.

The torsion bar 52 can define a generally unchanging (e.g., constant) spring rate. Thus, as the outer material on the drive wheel 32 wears, the load applied by the ground to the torsion bar 52 in the first direction increases. Correspondingly, the torsion bar 52 pivots in the first direction to maintain contact between the casters 40, 42 and the ground. Put differently, the torsion bar 52 biases the casters 40, 42 towards the ground in order to maintain contact between the casters 40, 42 and the ground throughout the service life of the drive wheel 32, without the need for manual adjustment of the casters. As should be appreciated, the torsion bar 52 is the only biasing element used in this configuration. Thus, there are no coil and/or torsion springs used in combination with the torsion bar assembly 50.

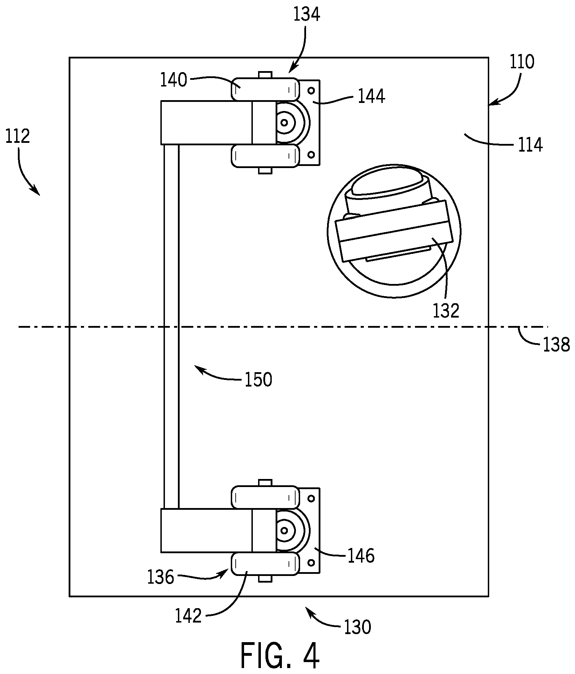

The torsion bar assembly can also be utilized in MHVs having alternative wheel arrangements. In the following figures, like elements will be referenced using like numerals increased by a value of 100 (e.g., vehicle frame 14 and vehicle frame 114). For example, FIG. 4 illustrates an MHV 110 having a drive wheel 132 laterally offset from the longitudinal axis 138 of the MHV 110. The MHV 110 further includes a torsion bar assembly 150 coupled between first and second caster assemblies 134, 136. The torsion bar assembly 150 functions similarly to the torsion bar assembly 50 as described above with reference to FIGS. 1-3.

In alternative and/or additional non-limiting examples, the drive wheel can be coupled to the torsion bar, such that rotation of the torsion bar adjusts the position of the drive wheel. According to other non-limiting examples, the drive wheel can be coupled to the vehicle frame such that the drive wheel can be moveable in the vertical direction (perpendicular to the ground) via adjustment of the torsion bar.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, embodiments have been described in a way which enables a clear and concise specification to be written, but it is intended and will be appreciated that embodiments may be variously combined or separated without parting from the invention.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. Various features and advantages of the invention are set forth in the following claims.

## Claims

1. A material handling vehicle (10), comprising:
a vehicle frame (14);
a fork assembly (12) mounted to the vehicle frame (10);
a steerable drive wheel (32) mounted to the vehicle frame (10);
one or more caster assemblies (34, 36), mounted to the vehicle frame (10), adjacent the steerable drive wheel (32); and,
a torsion bar assembly (50) including:
a torsion bar (52) rigidly coupled to the one or more caster assemblies (34, 36); and, **characterized in**
at least one preload member (60) coupled to a distal end of the torsion bar (52);
wherein the preload member (60) is configured to adjust a static position of the one or more caster assemblies (34, 36) when unloaded thereby resulting in the application of a torsional force on the torsion bar (52) when the caster assemblies are loaded.

2. The material handling vehicle (10) of claim 1, wherein the steerable drive wheel (32) is laterally offset from a longitudinal axis (38) of the material handling vehicle (10).

3. The material handling vehicle (10) of claim 1 or 2, wherein the preload member (60) is a first preload member coupled to a first end of the torsion bar (52), and wherein an opposing second end of the torsion bar (52) is rotationally fixed relative to the vehicle frame (14).

4. The material handling vehicle (10) of claim 1 or 2, wherein the torsion bar assembly (50) includes a first preload member coupled to a first end of the torsion bar (52) and a second preload member coupled to an opposing second end of the torsion bar (52).

5. The material handling vehicle (10) of any one of the preceding claims, wherein the one or more caster assemblies (34, 36) includes a first caster assembly and a second caster assembly, and wherein the first and second caster assemblies are mounted on laterally opposing sides of the steerable drive wheel (32).

6. The material handling vehicle (10) of any one of the preceding claims, wherein the preload member (60) includes an adjustment screw (64) threadedly engaged with the preload member (60).

7. The material handling vehicle (10) of claim 6, wherein clockwise adjustment of the adjustment screw (64) is configured to increase a contact force between the adjustment screw (64) and an underside of the vehicle frame (14), wherein the preload member (60) is rotatably coupled to the vehicle frame (14), such that rotating the preload member (60) also rotates the casters (40, 42) in the same direction.

8. The material handling vehicle (10) of claim 7, wherein increasing the contact force applied to the underside of the vehicle frame (14) by the adjustment screw (64) is configured to rotate the preload member (60) about an axis formed by the torsion bar (52).

9. The material handling vehicle (10) of any of claims 6-8, wherein rotation of the preload member (60) about the axis formed by the torsion bar (52) adjusts the static position of the one or more caster assemblies (34, 36).

10. The material handling vehicle (10) of any of claims 6-9, wherein the adjustment screw (64) bears against the underside of the vehicle frame (14).

11. The material handling vehicle (10) of any one of the claims 6-10, wherein a normal force applied by the vehicle frame (14) on the adjustment screw (64) rotates the preload member (60) about an axis formed by the torsion bar (52).

12. The material handling vehicle (10) of any one of the preceding claims, wherein the caster assemblies (34, 36) include:
one or more casters (40, 42);
a base plate (44, 46) mounted between the one or more casters (40, 42) and the vehicle frame (14); and,
a caster arm (54) rigidly mounted to the base plate (44, 46).

13. The material handling vehicle (10) of claim 12, wherein the caster arm (54) mounts to the torsion bar (52) at one end and mounts to the one or more casters (40, 42) at an opposing end.

## Patentansprüche

1. Materialhandhabungsfahrzeug (10), umfassend:
einen Fahrzeugrahmen (14);
eine Gabelanordnung (12), die am Fahrzeugrahmen (10) montiert ist;
ein lenkbares Antriebsrad (32), das am Fahrzeugrahmen (10) montiert ist;
eine oder mehrere Lenkrollenbaugruppen (34, 36), die am Fahrzeugrahmen (10) neben dem lenkbaren Antriebsrad (32) montiert sind; und
eine Torsionsstabanordnung (50), die beinhaltet:
einen Torsionsstab (52), der starr mit der einen oder den mehreren Lenkrollenbaugruppen (34, 36) gekoppelt ist; und,
**dadurch gekennzeichnet, dass**
mindestens ein Vorspannelement (60) mit einem distalen Ende des Torsionsstabs (52) gekoppelt ist;
wobei das Vorspannelement (60) dazu konfiguriert ist, eine statische Position der einen oder der mehreren Lenkrollenbaugruppen (34, 36) im unbelasteten Zustand einzustellen, wodurch eine Torsionskraft auf den Torsionsstab (52) aufgebracht wird, wenn die Lenkrollenbaugruppen belastet sind.

2. Materialhandhabungsfahrzeug (10) nach Anspruch 1, wobei das lenkbare Antriebsrad (32) in Bezug auf eine Längsachse (38) des Materialhandhabungsfahrzeugs (10) seitlich versetzt ist.

3. Materialhandhabungsfahrzeug (10) nach Anspruch 1 oder 2, wobei das Vorspannelement (60) ein erstes Vorspannelement ist, das mit einem ersten Ende des Torsionsstabs (52) gekoppelt ist, und wobei ein gegenüberliegendes zweites Ende des Torsionsstabs (52) relativ zum Fahrzeugrahmen (14) drehfixiert ist.

4. Materialhandhabungsfahrzeug (10) nach Anspruch 1 oder 2, wobei die Torsionsstabanordnung (50) ein erstes Vorspannelement beinhaltet, das mit einem ersten Ende des Torsionsstabs (52) gekoppelt ist, und ein zweites Vorspannelement, das mit einem gegenüberliegenden zweiten Ende des Torsionsstabs (52) gekoppelt ist.

5. Materialhandhabungsfahrzeug (10) nach einem der vorhergehenden Ansprüche, wobei die eine oder die mehreren Lenkrollenbaugruppen (34, 36) eine erste Lenkrollenbaugruppe und eine zweite Lenkrollenbaugruppe beinhalten, und wobei die erste und die zweite Lenkrollenbaugruppe auf seitlich gegenüberliegenden Seiten des lenkbaren Antriebsrads (32) montiert sind.

6. Materialhandhabungsfahrzeug (10) nach einem der vorhergehenden Ansprüche, wobei das Vorspannelement (60) eine Einstellschraube (64) beinhaltet, die mit dem Vorspannelement (60) in Gewindeeingriff steht.

7. Materialhandhabungsfahrzeug (10) nach Anspruch 6, wobei eine Einstellung der Einstellschraube (64) im Uhrzeigersinn dazu konfiguriert ist, eine Kontaktkraft zwischen der Einstellschraube (64) und einer Unterseite des Fahrzeugrahmens (14) zu erhöhen, wobei das Vorspannelement (60) drehbar mit dem Fahrzeugrahmen (14) gekoppelt ist, so dass ein Drehen des Vorspannelements (60) auch die Lenkrollen (40, 42) in derselben Richtung dreht.

8. Materialhandhabungsfahrzeug (10) nach Anspruch 7, wobei eine Erhöhung der von der Einstellschraube (64) auf die Unterseite des Fahrzeugrahmens (14) ausgeübten Kontaktkraft dazu konfiguriert ist, das Vorspannelement (60) um eine durch den Torsionsstab (52) gebildete Achse zu drehen.

9. Materialhandhabungsfahrzeug (10) nach einem der Ansprüche 6 bis 8, wobei eine Drehung des Vorspannelements (60) um die durch den Torsionsstab (52) gebildete Achse die statische Position der einen oder der mehreren Lenkrollenbaugruppen (34, 36) einstellt.

10. Materialhandhabungsfahrzeug (10) nach einem der Ansprüche 6 bis 9, wobei die Einstellschraube (64) gegen die Unterseite des Fahrzeugrahmens (14) anliegt.

11. Materialhandhabungsfahrzeug (10) nach einem der Ansprüche 6 bis 10, wobei eine vom Fahrzeugrahmen (14) auf die Einstellschraube (64) ausgeübte Normalkraft das Vorspannelement (60) um eine durch den Torsionsstab (52) gebildete Achse dreht.

12. Materialhandhabungsfahrzeug (10) nach einem der vorhergehenden Ansprüche, wobei die Lenkrollenbaugruppen (34, 36) beinhalten:
eine oder mehrere Lenkrollen (40, 42);
eine Grundplatte (44, 46), die zwischen der einen oder den mehreren Lenkrollen (40, 42) und dem Fahrzeugrahmen (14) montiert ist; und
einen Lenkrollenarm (54), der starr an der Grundplatte (44, 46) montiert ist.

13. Materialhandhabungsfahrzeug (10) nach Anspruch 12, wobei der Lenkrollenarm (54) an einem Ende am Torsionsstab (52) montiert ist und an einem gegenüberliegenden Ende an der einen oder den mehreren Lenkrollen (40, 42) montiert ist.

## Revendications

1. Véhicule de manutention de matériaux (10), comprenant :
un châssis de véhicule (14) ;
un ensemble à fourche (12) monté sur le châssis de véhicule (10) ;
une roue motrice directrice (32) montée sur le châssis de véhicule (10) ;
un ou plusieurs ensembles de roulettes (34, 36), montés sur le châssis de véhicule (10), adjacents à la roue motrice directrice (32) ; et,
un ensemble barre de torsion (50) incluant :
une barre de torsion (52) couplée rigidement aux un ou plusieurs ensembles de roulettes (34, 36) ; et, **caractérisé en ce qu'**il comprend :
au moins un élément de précharge (60) couplé à une extrémité distale de la barre de torsion (52) ;
dans lequel l'élément de précharge (60) est configuré pour ajuster une position statique des un ou plusieurs ensembles de roulettes (34, 36) à l'état non chargé, provoquant ainsi l'application d'une force de torsion sur la barre de torsion (52) lorsque les ensembles de roulettes sont chargés.

2. Véhicule de manutention de matériaux (10) selon la revendication 1, dans lequel la roue motrice directrice (32) est décalée latéralement par rapport à un axe longitudinal (38) du véhicule de manutention de matériaux (10).

3. Véhicule de manutention de matériaux (10) selon la revendication 1 ou 2, dans lequel l'élément de précharge (60) est un premier élément de précharge couplé à une première extrémité de la barre de torsion (52), et dans lequel une seconde extrémité opposée de la barre de torsion (52) est fixée en rotation par rapport au châssis de véhicule (14).

4. Véhicule de manutention de matériaux (10) selon la revendication 1 ou 2, dans lequel l'ensemble barre de torsion (50) inclut un premier élément de précharge couplé à une première extrémité de la barre de torsion (52) et un second élément de précharge couplé à une seconde extrémité opposée de la barre de torsion (52).

5. Véhicule de manutention de matériaux (10) selon l'une quelconque des revendications précédentes, dans lequel les un ou plusieurs ensembles de roulettes (34, 36) incluent un premier ensemble de roulettes et un second ensemble de roulettes, et dans lequel les premier et second ensembles de roulettes sont montés sur des côtés latéralement opposés de la roue motrice directrice (32).

6. Véhicule de manutention de matériaux (10) selon l'une quelconque des revendications précédentes, dans lequel l'élément de précharge (60) inclut une vis d'ajustement (64) engagée par filetage avec l'élément de précharge (60).

7. Véhicule de manutention de matériaux (10) selon la revendication 6, dans lequel un ajustement dans le sens horaire de la vis d'ajustement (64) est configuré pour augmenter une force de contact entre la vis d'ajustement (64) et une face inférieure du châssis de véhicule (14), dans lequel l'élément de précharge (60) est couplé de façon rotative au châssis de véhicule (14), de telle sorte qu'une rotation de l'élément de précharge (60) fait également tourner les roulettes (40, 42) dans la même direction.

8. Véhicule de manutention de matériaux (10) selon la revendication 7, dans lequel l'augmentation de la force de contact appliquée à la face inférieure du châssis de véhicule (14) par la vis d'ajustement (64) est configurée pour faire tourner l'élément de précharge (60) autour d'un axe formé par la barre de torsion (52).

9. Véhicule de manutention de matériaux (10) selon l'une quelconque des revendications 6 à 8, dans lequel la rotation de l'élément de précharge (60) autour de l'axe formé par la barre de torsion (52) ajuste la position statique des un ou plusieurs ensembles de roulettes (34, 36).

10. Véhicule de manutention de matériaux (10) selon l'une quelconque des revendications 6 à 9, dans lequel la vis d'ajustement (64) s'appuie contre la face inférieure du châssis de véhicule (14).

11. Véhicule de manutention de matériaux (10) selon l'une quelconque des revendications 6 à 10, dans lequel une force normale appliquée par le châssis de véhicule (14) sur la vis d'ajustement (64) fait tourner l'élément de précharge (60) autour d'un axe formé par la barre de torsion (52).

12. Véhicule de manutention de matériaux (10) selon l'une quelconque des revendications précédentes, dans lequel les ensembles de roulettes (34, 36) incluent :
une ou plusieurs roulettes (40, 42) ;
une plaque de base (44, 46) montée entre les une ou plusieurs roulettes (40, 42) et le châssis de véhicule (14) ; et,
un bras de roulette (54) monté rigidement sur la plaque de base (44, 46).

13. Véhicule de manutention de matériaux (10) selon la revendication 12, dans lequel le bras de roulette (54) est monté sur la barre de torsion (52) au niveau d'une extrémité et est monté sur les une ou plusieurs roulettes (40, 42) au niveau d'une extrémité opposée.
